# EUROPEAN PATENT SPECIFICATION

(11) **EP 3 719 240 B1**
(45) Date of publication and mention of the grant of the patent: **05.01.2022**
(21) Application number: 20164378.0
(22) Date of filing: 20.03.2020
(51) Int. Cl.: E04H 9/10, E04H 15/18, F16B 7/04, F16B 5/06, E04B 1/24

(54) **FIXING DEVICE FOR BEAM PROFILES**
BEFESTIGUNGSVORRICHTUNG FÜR TRÄGERPROFILE
DISPOSITIF DE FIXATION POUR POUTRES

(30) Priority: 05.04.2019 NO 20190470
(43) Date of publication of application: 07.10.2020
(73) Proprietor: Vardalife AS, 0255 Oslo (NO)
(72) Inventor: EIDE, Roar Godager, 2636 ØYER (NO)
(74) Representative: Zacco Norway AS

(56) References cited:
- EP-A1- 1 757 820
- CN-U- 204 942 173
- US-A- 3 669 479
- US-A1- 2015 225 940
- US-B1- 7 600 348

## Description

The invention relates to a tent module comprising beam profiles and canvas segments, and more specifically to a fixing device for such a tent module.

### BACKGROUND

Tents are commonly used as temporary structures for housing personnel and equipment. In areas of conflict such as during war and at refugee camps, tents may serve as accommodation, canteens, infirmaries, workshops, etc. Tent modules may be configured for connection to one another, such that several tent modules may be connected to form a larger tent.

However, it is often time consuming and cumbersome to set up and assemble existing tent modules, and there may be limitations in the way the tent modules can be built and assembled. Many commonly utilized tent modules specifically aimed at military operations are not configured for easy setting up and flexibility, and may not even be configured for connection to one another. A tent module made from beam profiles and canvas segments may be difficult to set up, and the tent frame is especially difficult to make sufficiently rigid and stable, particularly at the junctions of the beam profiles.

Tent modules are also difficult to make ballistic, i.e. such that they can withstand the impact from bullets and debris from explosions. A separate ballistic wall may be built in order to achieve such protection, or massive blocks or other forms of heavy protection modules may be situated around the tent modules. This is cumbersome and expensive to both transport and set up.

Military equipment may be shipped and stored in containers, and the containers are both rigid and offer better protection than a tent canvas.

There is a need for an improved tent module and a fixing device to reduce or eliminate the abovementioned disadvantages of known techniques. It is an objective of the present invention to achieve this and to provide further advantages over the state of the art.

Documents useful for understanding the field of technology include US 3669479 A, NO 330979, CN 204942173 U and DE 102008051338 A1.

### SUMMARY

In an embodiment, there is provided a fixing device for fixing two beam profiles comprising recessed channels. The fixing device comprising a first plate element comprising a contact side configured to abut a contact side of a second and a third plate element, the first plate element further comprising two lug portions and a clamping portion, each lug portion comprising a protrusion protruding in a direction away from the contact side and configured to be inserted into a respective recessed channel. The second and third plate element further comprising a lug portion and a clamping portion, the lug portion comprising a protrusion protruding in a direction away from the contact side and configured to be inserted into recessed channels. The contact side of the second and the third plate element is configured to pivotably abut the contact side of the first plate element between the lug portion and the respective clamping portion. Clamping means are configured to bias the clamping portion of the first plate element in a direction towards the clamping portions of the second and third plate elements such that the second and third plate elements pivot relative to the first plate element and the lug portion of the second and third plate elements are biased in a direction away from the lug portions of the first plate element and into abutment with the respective recessed channels of the beam profiles.

According to another embodiment of the invention the first, second and third plate elements are rigid.

According to another embodiment of the invention the contact side of the second and third plate element are provided with an elevation between the lug portion and the clamping portion.

According to another embodiment of the invention the contact side of the first plate element is provided with an elevation between each lug portion and the clamping portion.

According to another embodiment of the invention the lug portion and clamping portion are angled relative to each other such that the elevation is an edge between the lug and clamping portions.

According to another embodiment of the invention the elevation is a curved portion of at least the contact side.

According to another embodiment of the invention the lug portions of the first plate element are arranged perpendicular to each other.

According to another embodiment of the invention the second and third plate elements are formed symmetrical.

According to another embodiment of the invention the clamping means extends through openings in the first, second, and third plate elements.

In an embodiment, there is provided a tent module comprising canvas segments, beam profiles and a fixing device.

According to another embodiment of the invention the beam profiles comprises keder rails configured for connection to a ballistic module comprising keder cords.

According to another embodiment of the invention the ballistic module comprises an open end for filling with mass.

According to another embodiment of the invention the tent module is configured for connection to other tent modules.

According to another embodiment of the invention the tent module is configured for connection to a container.

### BRIEF DESCRIPTION OF THE DRAWINGS

The above and other characteristics will become clear from the following description of embodiments, given as non-restrictive examples, with reference to the attached schematic figures.
Figure 1 is a perspective view of an embodiment of a tent module comprising beam profiles and canvas segments.
Figure 2 is a perspective view of an embodiment of a beam profile comprising a keder rail and a canvas segment comprising a keder cord.
Figure 3 is a side view of an embodiment of a frame for a tent module comprising beam profiles and fixing devices.
Figure 4 is a section view of an embodiment of a first beam profile comprising keder rails and recessed channels.
Figure 5 is a section view of an embodiment of a second beam profile comprising keder rails and recessed channels.
Figure 6 is an exploded view of an embodiment of a fixing device, illustrating first, second and third plate elements.
Figure 7 is a top view of the first plate element of a fixing device from figure 6, comprising lug portions.
Figure 8 is a section view of the third plate element along the dotted line A-A in figure 6.
Figure 9a illustrates a first plate element inserted into recessed channels at the junction of first and second beam profiles, and a second plate element inserted into the recessed channel of the second beam profile.
Figure 9b illustrates the first, second and third plate element inserted into the recessed channels at the junction of the two profiles.
Figure 9c illustrates the first, second and third plate element inserted into the recessed channels at the junction of the two profiles and biased together by clamping means.
Figure 10 is a section view along a first beam profile through two fixing devices fixed to the beam profile. The fixing devices are connected with a bracket.
Figure 11 is a perspective view of an embodiment where two tent modules are connected together.
Figure 12 is a perspective view of an embodiment of a tent module connected to a ballistic module.
Figure 13 is a perspective view of an embodiment with two tent modules, where one of the tent modules is connected to a container.
Figure 14 is a partial view of a tent module connected to a container, viewed in the direction of arrow B in figure 13.

### DETAILED DESCRIPTION

The following description may use terms such as "horizontal", "vertical", "lateral", "upper", "lower", "inner", "outer", "forward", "rear", etc. These terms generally refer to the views and orientations as shown in the figures and that are associated with a normal use of the invention. The terms are used for the reader's convenience only and shall not be limiting.

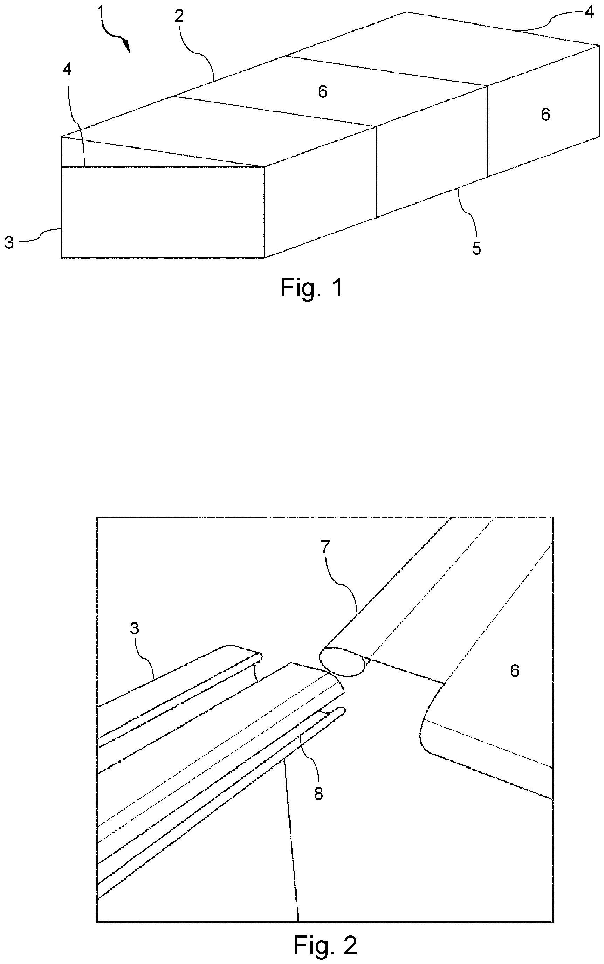

Referring initially to figure 1, an embodiment of a tent module 1 is illustrated. The tent module 1 comprises a frame 2 made of beam profiles, such as extruded aluminium profiles. The frame 2 comprises first beam profiles 3, and second beam profiles 4. The first beam profiles 3 may be used as vertical profiles at the corners and along the sides of the tent module 1. The second beam profiles 4 may be used as horizontal and angled profiles at the roof section of the tent module 1. The tent module 1 also comprises a tent canvas 5 that may comprise a plurality of individual tent canvas segments 6, connected to each other by the frame 2. Tent canvas segments 6 thus form both the walls and the roof of the tent module. The canvas segments 6 may come in a range of different sizes and configurations, depending on the use and intended positioning on the tent module 1. The canvas segments may be made from fabrics, reinforced plastics, or other known canvas materials.

A tent module 1 may have a length of about 10 metres, and a width of about 6 metres. First beam profiles 3 may be positioned vertically at the corners of the tent module 1, and spaced along the length of the tent module 1 at a distance of about 3,3 meters, such that four first beam profiles are spaced equally along the length of the tent module 1. The height of the tent module 1 may be maximum 3 meters, and the roof of the tent module 1 may be inclined such that rainwater etc. is directed towards one side of the tent module.

Figure 2 illustrates how a tent canvas segment 6 may be connected to a first beam profile 3. The tent canvas segments 6 comprise at one or more sides a keder cord 7. A keder cord 7 can as such be provided on all sides of a canvas segment 6. The keder cord 7 is an expanded portion of the canvas that runs lengthwise along at least a portion of the side of the canvas segment 6. The keder cord 7 may be a plastic rod, a steel wire or similarly, connected to the canvas segment 6. The cross section of the keder cord 7 may be circular. Instead of a plastic rod or other similar stiff element, the keder cord 7 may even be a part of the canvas segment 6 inflated with a foam or a similar suitable material. The keder cord 7 is configured for insertion into a corresponding keder rail 8.

The first and second beam profiles 3,4 comprise keder rails 8. A keder rail 8 is a groove or a recessed channel in the beam profiles 3,4, suitable for accommodating the keder cord 7 at one or both ends of the profile. A keder rail 8 is a groove extending along at least a length of a beam profile, comprising an opening with a width which is smaller than the width of the keder rail 8 itself. The keder cord 7 is only allowed to enter and exit the keder rail 8 at the ends of the keder rail 8, and is guided along the length of the beam profile. Once inserted, the keder cord 7 cannot escape the keder rail 8 in a lateral direction, and the canvas segment 6 is thus releasably fixed to the beam profile 3. The keder rail 8 is preferably shaped similarly to the keder cord 7, only slightly larger, such that the keder cord 7 can easily be inserted into the keder rail 8, from one or both ends.

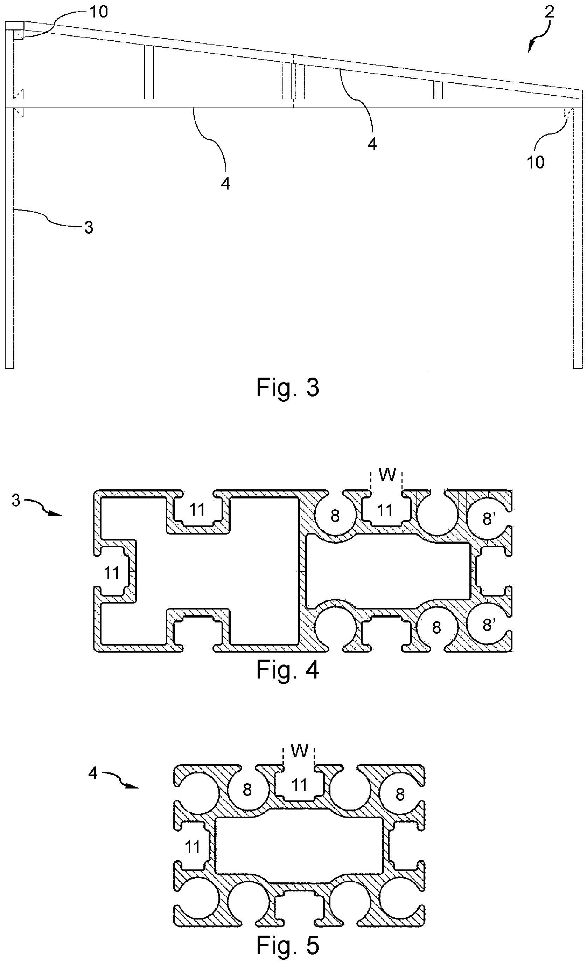

Canvas segments 6 may thus be releasably connected to the beam profiles without the use of additional tools or fastening means. This allows for fast, easy and secure fastening of canvas segments to beam profiles. Circular keder rails 8 are also illustrated in the section views in figure 4 and 5.

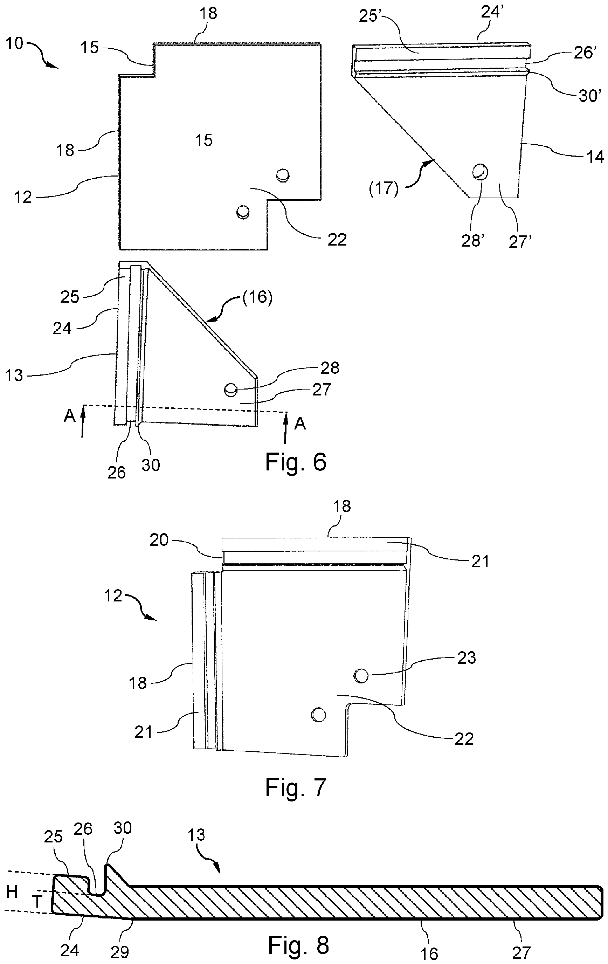

Figure 3 illustrates a side view of an embodiment of a frame 2 of a tent module. The frame 2 comprises first beam profiles 3 positioned vertically, and second beam profiles 4 positioned horizontally and angled. The beam profiles 3,4 are connected at junctions by a fixing device 10. The fixing device 10 may be positioned at corners of the frame 2, and provides for a secure connection of beam profiles 3,4 to each other at junctions of the frame 2. The fixing device 10 is described in further detail with reference to figure 6-10.

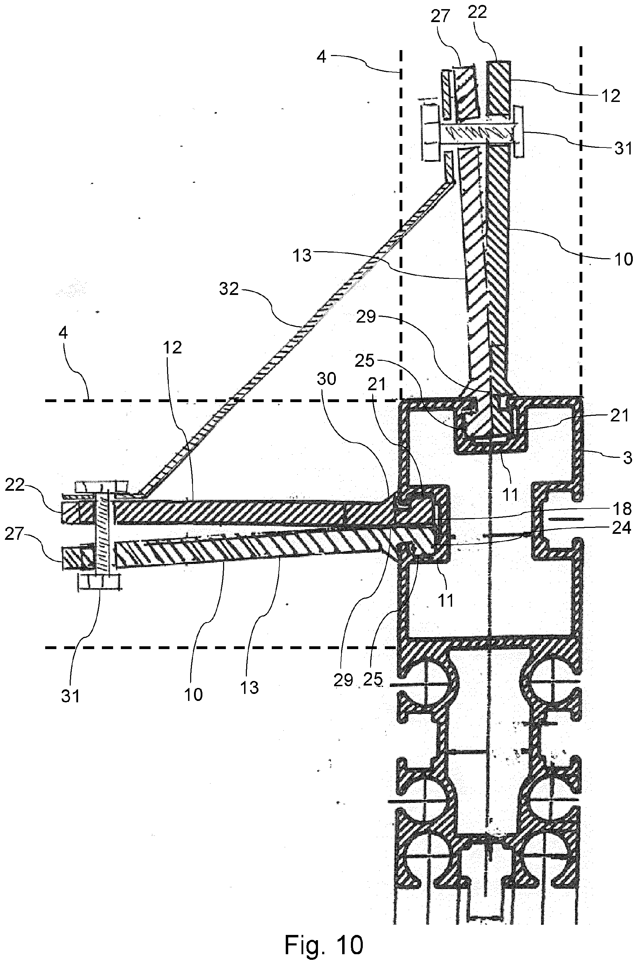

Figure 4 is a section view of an embodiment of a first beam profile 3. The first beam profile 3 comprises a plurality of keder rails 8, and a plurality of recessed channels 11. The recesses channels 11 are in the illustrated embodiment t-slot channels, but may be any shape of recessed channel. Similarly to the keder rail described with reference to figure 2, a recessed channel 11 extends along the length, or part of the length, of a beam profile and has a cross section where an opening having a width W is smaller then the width of the recessed channel itself. An object having a width of the recessed channel is thus not able to escape the recessed channel through the opening in a lateral direction (i.e to escape the beam profile in figure 4 in a direction outwards). The fixing device (not illustrated in figure 4, described further in detail with reference to figure 10) can thus be securely fixed to a beam profile comprising a recessed channel 11.

In the illustrated embodiment, the first beam profile 3 has an outer shape which is generally rectangular shaped, and each side comprises at least one recessed channel 11. Keder rails 8 are provided in pairs on three sides. Canvas segments preferably come in pairs of two, such that one segment comprises two independent canvas members, of the same shape and size, and where a canvas segment can be connected to a beam profile 3 and two keder rails 8 located on the same side of the beam profile 3. A tent module may thus consist of double canvas walls. Double canvas wall may be advantageous related to isolation, etc.

Figure 5 is a section view of an embodiment of a second beam profile 4. Corresponding features of the second beam profile 4 are given the same reference numbers as corresponding features of the first beam profile, and unless otherwise described, the same description is applicable to the second beam profile 4. The second beam profile 4 comprises a plurality of keder rails 8, and a plurality of recessed channels 11. In the illustrated embodiment, the second beam profile 4 has an outer shape which is generally rectangular shaped, and each side comprises a recessed channel 11. Keder rails 8 are provided in pairs on all sides of the second beam profile 4.

Referring now to figures 6, 7 and 8. Figure 6 illustrates an exploded view of an embodiment of the fixing device 10. The fixing device 10 comprises a first plate element 12, a second plate element 13 and a third plate element 14. Figure 7 illustrates the reverse side of the first plate element 12 from figure 6, and figure 8 is a cross section of the third plate element 14 along the dotted line A-A in figure 6.

The first plate element 12 may have a generally square outline, as in the illustrated embodiment. The first plate element 12 comprises a contact side 15, configured to abut a contact side 16 of the second plate element 13 and a contact side 17 of the third plate element 14. The contact sides 16,17 of the second and third plate elements 13,14 are the rear sides of the plate elements 13,14 and not visible in figure 6.

The first plate element 12 comprises two longitudinal lug portions 18, provided on respective edges of the first plate element 12. The lug portions 18 are in the illustrated embodiment two adjacent edges, separated by an incision 20. Each of the lug portions 18 comprises a protrusion 21, which protrudes in a direction away from the contact side 15. The protrusions 21 extend along the lug portions 18, and are configured to be inserted into recessed channels of beam profiles. In the illustrated embodiment, the longitudinal lug portions 18 are arranged perpendicular to each other, but may be angled in any suitable angle to each other.

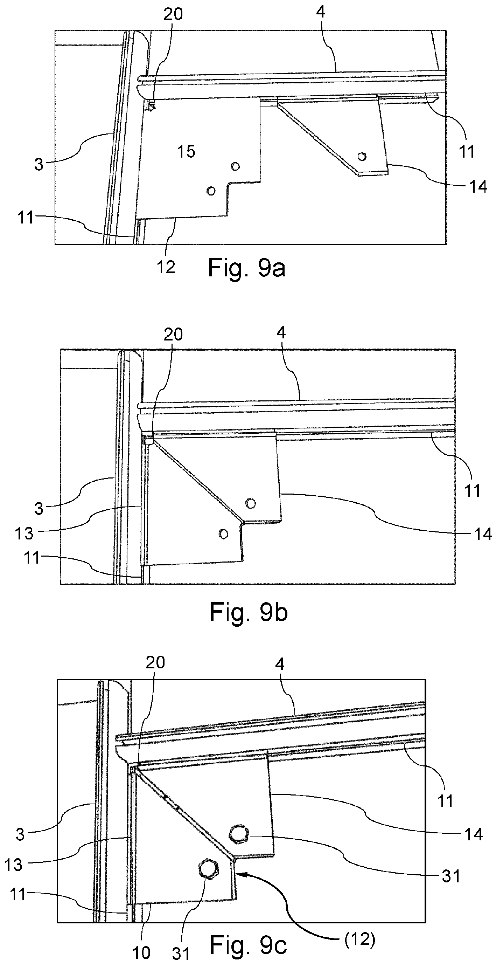

The first plate element 12 further comprises a clamping portion 22. In the illustrated embodiment, the clamping portion 22 comprises two clamping means supports 23. The clamping means supports 23 may be openings or holes through the plate element 12, and are provided in order to easily accommodate clamping means (described later with reference to figure 9c). The clamping portion 22 may have various configurations or simply be an area adapted to accommodate clamping means.

The second plate element 13 may have a generally triangular outline, as in the illustrated embodiment. The second plate element 13 comprises a contact side 16, configured to abut the contact side 15 of the first plate element 12. The second plate element 13 comprises a longitudinal lug portion 24, in the illustrated embodiment provided on an edge of the second plate element 13. The lug portion 24 comprises a protrusion 25 which protrudes in a direction away from the contact side 16. The protrusion 25 extends along the lug portion 24, and is configured for being inserted into a recessed channel of a beam profile.

As illustrated in figure 8, the protrusion 25 may have a generally rectangular cross-section, and it may have e.g. rounded edges. Such a cross-section may make it fit into and lock securely to e.g. a t-slot channel, as described previously. A height H of the protrusion 25 is also indicated in the figure.

Figure 8 illustrates a cross-section through the second plate element 13, however the cross section and described features are also applicable to the first and third plate elements 12,14. The lug portions of the first, second and third plate elements 12,13,14 may have an identical cross section. The lug portion 24 may comprise a neck portion 26, the neck portion 26 allows the plate elements to enter a recessed channel if the thickness of the plate element itself is greater than the recessed opening, described in more detail with reference to figure 10. The neck portion 26 is the portion of the lug portion 24 configured for being positioned in the recessed channel opening when the plate element is installed in a beam profile. In figure 8, a neck portion thickness T is indicated. The neck portion thickness T may be equal to, or smaller or greater than a thickness of the plate elements.

The second plate element 13 comprises a clamping portion 27, which may comprise a clamping means support 28. Similar to the clamping portion 22 of the first plate element 12, the clamping means support 28 may simply be an opening or a hole through the second plate element 13, and is provided in order to easily accommodate clamping means.

The contact side 16 of the second plate element 13 may comprise an elevation 29 between the lug portion 24 and the clamping portion 27. The elevation 29 is in the illustrated embodiment an edge formed between the lug portion 24 which is angled relative to the clamping portion 27. In other embodiments, the elevation 29 may be a dedicated hump, a curved portion of the contact side 16, or anything that provides the contact side 16 with a non-flat surface. In a cross section such as figure 8, the elevation 29 provides a pivot point on the contact side 16. The elevation 29 is in the illustrated embodiment positioned closer to the lug portion 24 than the clamping portion 27. A lever arm is thus created between the elevation 29 and the clamping portion 27, providing a leverage when the clamping portion is biased.

The third plate element 14 may also comprise a similar elevation 29, and the first plate element 12 may comprise such an elevation 29. The first plate element 12 may comprise an elevation provided between the respective lug portions 18 and the clamping portion 22.

The second and third plate elements 13,14 may be formed generally symmetrical. If the second and third plate elements 13,14 comprise an elevation 29, they are pivotable about the elevations 29 as the second and third plate element 13,14 are biased towards the first plate element 12, and the elevations 29 abut the contact side 15 of the first plate element 12. The first plate element 12 may therefore not comprise a corresponding elevation 29. Alternatively, if the first plate element 12 comprises an elevation 29 provided between the lug portions 18 and the clamping portion 22, the second and third plate elements 13,14 may therefore not comprise an elevation 29. In all these embodiments, the contact side 16,17 of the second and third plate elements 13,14 is configured to pivotably abut the contact side 15 of the first plate element 12.

The first, second and third plate elements 12,13,14 may further comprise a ridge 30. The ridge 30 may extend along the length of the lug portion 24 and is configured to abut the beam profile and enhance stability of the fixing device 10 when installed into beam profiles.

Figures 9a, 9b and 9c illustrate a sequence of installing the fixing device 10 and fixing a first and second beam profile 3,4. The first and second beam profiles 3,4 may have a cross section corresponding to the embodiments illustrated in figure 4 and 5, but may be any beam profiles comprising a recessed channel 11. At the junction between the first beam profile 3 and the second beam profile 4, the first plate element 12 is firstly inserted into the recessed channel 11 of each respective beam profile 3,4. The height H of the protrusions of the first plate element 12 is less than the width of the recessed channel opening, such that the first plate element can be inserted into the recessed channels 11 from any direction, and especially a lateral direction. The incision 20 allows the first plate element 12 to be fully inserted into the junction between the first and second beam profiles 3,4.

In order to provide maximum strength of the fixing device 10, a maximum thickness T of the neck portion 26 (not illustrated in figures 9a-9c, see figure 8) is desirable. The combined thickness of the neck portions 26 of the first and second, and the first and third, plate elements must not exceed the width W of the recessed channel opening (described in figure 4), but may be approximate this width.

The fixing device 10 may thus be assembled such that the first plate element 12 is inserted first into the recessed channels 11 of the beam profiles 3,4. When the first plate element 12 has been placed, the second or third plate element can be installed. Figure 9a illustrates the third plate element 14 inserted into the recessed channel 11 of the second beam profile 4 outside of where the first plate element 12 is positioned. The height of the protrusion H (not shown in figure 9c, see figure 8) of the second and third plate elements may have a height which is maximum the width of the recessed channel opening. This is true for all three plate elements 12,13,14, provided they are to be inserted into the recessed channel 11 in a lateral direction, and not inserted into the recessed channel 11 from an end of the beam profile. If the height H of the protrusion 25 (described in figure 8) of the second and/or third plate element is approximately the same as the width W of the recessed channel opening, there is no room left in the recessed channel opening for the second and/or the third plate element to be inserted in a lateral direction into the recessed channel 11 where the first plate element 12 is already present. The second and third plate elements 13,14 can, however, be inserted into the recessed channel 11 where the first plate element 12 is not present, as illustrated in figure 9a, and then be slid along the recessed channel 11 into contact with the first plate element 12, and into an overlapping position, as illustrated in figure 9b.

When the third plate element 14 is inserted into the recessed channel, it can be slid towards the first plate element 12, until they overlap and the contact side of the third plate element 14 contacts or is adjacent the contact side 15 of the first plate element 12. This is illustrated in figure 9b. In figure 9b, the second plate element 13 has also been inserted into the recessed channel 11 and has been slid upwards to overlap the first plate element 12. In order to enable such a sliding overlap, the combined neck thickness T (explained previously in relation to figure 8) of the first and second, and first and third plate elements must not exceed the width W (figure 4 and 5) of the recessed channel opening.

When the first and/or second plate elements are placed onto the first plate element 12, i.e. the contact side of the second and third plate elements 13,14 are adjacent and facing the contact side of the first plate element 12, the lug portions of the first plate element 12 are positioned adjacent the lug portions of the second and third plate elements, respectively. The protrusions of each lug portion protruding in a direction away from each respective plate element's contact side. This is illustrated more clearly in figure 10.

In figure 9c the second and third plate elements 13,14 are clamped to the first plate element 12 by clamping means 31. The clamping means 31 in the illustrated embodiment comprises a bolt and nut, but may be any means, integrated or separate, configured to clamp the clamping portion of the first and second plate elements 12,13, and first and third plate elements 12,14 towards each other. The clamping means 31 may in an alternative embodiment be a device which clamps both the second and the third plate element 13,14 to the first plate element 12 simultaneously, instead of two individual clamping means 31 as in the illustrated embodiment.

As the clamping portions of the first and second, and first and third, plate elements are biased towards each other by the clamping means 31, the second and third plate elements 13,14 pivot about the elevations 29 (not visible in figures 9a-9c, see figure 8 or 10), and the lug portions of the second and third plate elements 13,14 are biased in a direction away from the lug portions of the first plate element 12. The lug portions of all the plate elements 12,13,14 thus exert a force on the inside of the recessed channel, and the beam profiles 3,4 are thus releasable fixed to each other.

The plate elements 12,13,14 may preferably be made rigid, such that the plate elements 12,13,14 do not deform upon biasing the clamping portions together, and the clamping force from the clamping means 31 are thus directly transferred to the beam profiles. The rigid plate elements 12,13,14 thus provide for secure fixing to beam profiles 3,4. The second and third plate elements 13,14 allow optimal fixation of the fixing device 10 to each beam profile 3,4 as the clamping force to the beam profiles 3,4 can be individually adjusted.

Figure 10 is a section view through two fixing devices 10 fixing a first beam profile 3 to two second beam profiles 4. The section view is seen in the longitudinal direction of the first beam profile 3, and the two second beam profiles 4 are indicated with dotted lines, in order to indicate their position out of the plane of the section view.

The clamping means 31 biases the clamping portions 22 of the first plate elements 12 towards the clamping portions 27 of the second plate elements 13. Because of the section view, the third plate element is not visible in the figure. In the illustrated embodiment, the first plate elements 12 are not provided with an elevation, such that only the second plate elements 13 comprise the elevation 29. The clamping force from the clamping means pivots the two pairs of first and second plate elements 12,13 relative to each other about the elevation 29, such that the lug portion 24 of the second plate element is biased away from the lug portion 18 of the first plate element 12. The protrusions 21,25 of the first and second plate elements 12,13 are thus biased against the inside of the recessed channels 11 of the first beam profile 3, and the fixing device 10 is firmly and releasably fixed to the beam profile. The fixing devices 10 are similarly fixed to the second beam profiles 4 by the other lug portion of the first plate element and the lug portions of the third plate elements.

As explained previously, the ridges 30 may act as additional supports when the fixing device 10 is fixed to the beam profiles 3,4.

In order to further enhance the stability at a junction, a bracket 32 may be provided between two fixing devices. The bracket 32 may be connected to the fixing devices 10 by the clamping means 31, and provides a stiff connection between two fixing devices 10. The bracket 32 prevents the fixing devices 10 and second beam profiles 4 to rotate about a longitudinal axis of the first beam profile 3, i.e. the bracket 32 limits the potential movement in a direction with or towards the clock about the first beam profile 3 as seen in figure 10. The bracket 32 may be a metal bar with two holes at either end which e.g. part of the clamping means 31 can be tread through and firmly connected to.

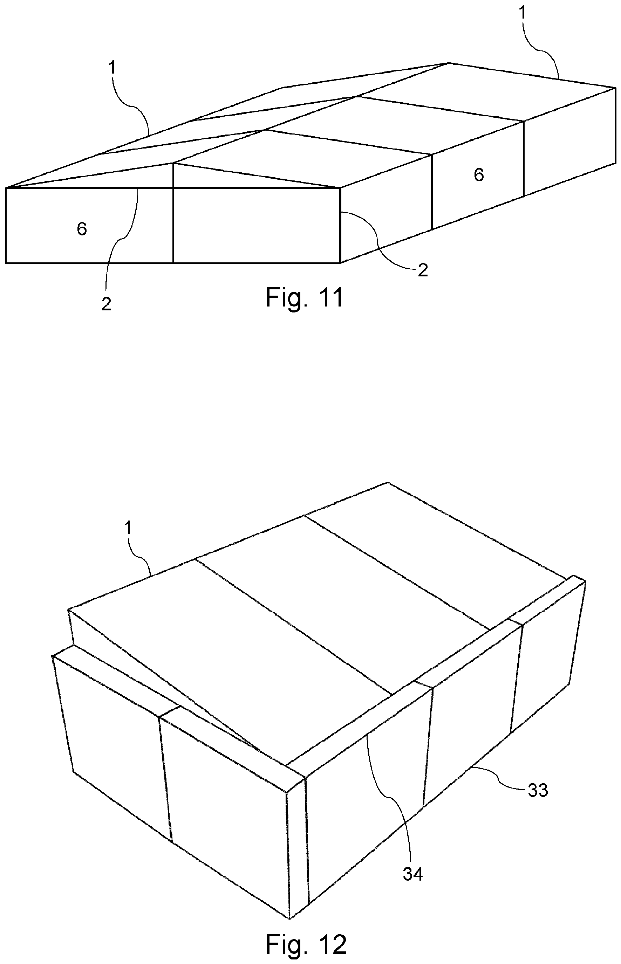

Figure 11 illustrates two tent modules 1 connected to each other to form a larger tent. The canvas segments 6 where the two tent modules 1 meet can easily be removed in order to generate a large internal room, or can be kept in order to provide internal walls. The frame 2 of the two tent modules 2 can be connected by means of fixing devices connected in pairs to the two tent modules. A fixing device may be connected to a beam profile of a tent module, and the other fixing device may be connected to a corresponding beam profile of the other tent module where the two tent modules meet. A fixing point on each beam profile is thus created, and several such pairs of fixing points can be generated by applying several pairs of fixing devices along the beam profiles. A pair of fixing devices can be connected to each other by means of a screw or a bracket, similar to that illustrated in figure 10, but the fixing devices may be positioned in parallel and must be connected to different beam profiles instead of the arrangement in figure 10 where they are illustrated in a perpendicular relationship and connected to the same beam profile.

Figure 12 illustrates a tent module 1 provided with a ballistic module 33. The ballistic module 33 is attached to the tent module 1 by means of the keder-system described with reference to figure 2. The ballistic module 33 is a separate module and may be made of canvas-segments, a durable fabric or other suitable materials. The ballistic module 33 comprises keder cords 7 (described with reference to figure 4), and is attached to the first beam profile 3 by attaching the keder cords 7 to corresponding keder rails 8' of the first beam profiles 3 of the tent module 1. In figure 4, the keder rails 8' may be dedicated especially for attachment to such a ballistic module 33. The ballistic module 33 may be attached to the tent module 1 at each first beam profile 3, with e.g. two keders on each profile.

The ballistic module 33 may be a double-walled structure with an open end 34 at the top, where mass such as sand, gravel and crushed stones may be fed into the ballistic module 33. The mass may be found nearby where the tent module is set up. The open end 34 may extend along the whole top of the ballistic module. The ballistic module 33 may thus be filled with mass making it ballistic and able to withstand heavy artillery. The double-walled structure of the ballistic module 33 may comprise honeycomb-patterned internal walls or similar, configured for providing a very rigid and firm ballistic wall when filled with sand, gravel, and similar mass.

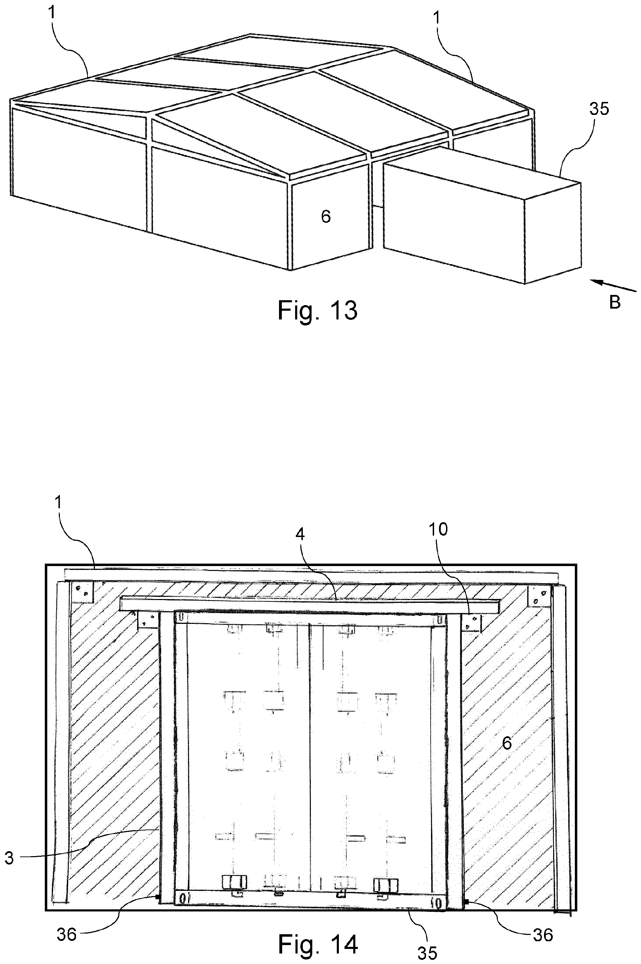

Figure 13 illustrates two tent modules 1 connected to each other, and a container 35 connected to one of the modules. Several tent modules 1 may be shipped in a container 35, and the tent modules 1 may be configured for connection to the container 35 itself. The container 35 may comprise equipment and when connected to the tent module 1, may serve as an additional room, and especially a ballistic room. A container 35 may be connected to the tent module 1 at the location of each wall canvas segment 6, such that several containers 35 can be connected to a tent module 1.

Figure 14 illustrates a detailed view of a container 35 connected to a tent module 1, viewed in the direction of the arrow B of figure 13. The tent module 1 may be provided with additional first or second beam profiles 3,4, connected to each other by means of fixing devices 10. The beam profiles 3,4 may be positioned flat against the sides of the container 35. When the beam profiles 3,4 are fixed to each other by the fixing devices 10, the beam profiles 3,4 are held securely adjacent to the container 35. Near the bottom of each beam profile 3 positioned on the sides of the container 35, a fixing means 36 such as a screw or bolt may fix the beam profiles 3 to the container 35. Many containers 35 comes readily equipped with a screw hole that can be utilized for this purpose. A canvas segment 6 may be split into segments in order to accommodate the container 35. The canvas segments 6 may overlap and may be provided with Velcro in order to ensure a tight overlap. The canvas segments 6 may also overlap the sides and top of the container 35, in order to provide a rain-proof connection between the tent module 1 and the container 35.

## Claims

1. A fixing device (10) for fixing two beam profiles (3,4) comprising recessed channels (11), the fixing device (10) comprising:
a first plate element (12) comprising a contact side (15) configured to abut a contact side (16,17) of a second and a third plate element (13,14),
the first plate element (12) further comprising two lug portions (18) and a clamping portion (22),
each lug portion (18) comprising a protrusion (21) protruding in a direction away from the contact side (15) and configured to be inserted into a respective recessed channel (11), **characterised in that** the fixing device further comprises:
the second and third plate element (13,14) , each further comprising a lug portion (24,24')
and a clamping portion (27,27'),
the lug portion (24,24') comprising a protrusion (25,25') protruding in a direction away from the contact side (13,14) and configured to be inserted into a respective recessed channel (11),
the contact side (16,17) of the second and the third plate element (13,14) being configured to pivotably abut the contact side (15) of the first plate element (12) between the lug portion (18, 24, 24') and the respective clamping portion (22, 27, 27'), clamping means (31) configured to bias the clamping portion (22) of the first plate element (12) in a direction towards the clamping portion (27,27') of the second and third plate element (13,14) such that the second and third plate element (13,14) pivot relative to the first plate element (12), and the lug portion (24,24') of the second and third plate element (13,14) is biased in a direction away from the lug portions (18) of the first plate element (12) into abutment with the respective recessed channels (11) of the beam profiles (3,4).

2. The fixing device (10) according to claim 1, where the first, second and third plate elements (12,13,14) are rigid.

3. The fixing device (10) according to claim 1 or 2, where the contact side (16,17) of the second and third plate element (13,14) is provided with an elevation (29) between the lug portion (24,24') and the clamping portion (27,27').

4. The fixing device (10) according to any one of the previous claims, where the contact side (15) of the first plate element (12) is provided with an elevation (29) between each lug portion (18) and the clamping portion (22).

5. The fixing device (10) according to claim 3 or 4, where the lug portion (18;24) and clamping portion (22;27) are angled relative to each other such that the elevation (29) is an edge between the lug and clamping portions (18,22;24,27;24',27').

6. The fixing device (10) according to any one of the previous claims 3-5, where the elevation (29) is a curved portion of at least the contact side (15;16).

7. The fixing device (10) according to any one of the previous claims, where the lug portions (18) of the first plate element (12) are arranged perpendicular to each other.

8. The fixing device (10) according to any one of the previous claims, where the second and third plate elements (13,14) are formed symmetrical.

9. The fixing device (10) according to any one of the previous claims, where the clamping means (31) extends through openings (23, 28) in the first, second, and third plate elements (12,13,14).

10. A tent module (1) comprising canvas segments (6), beam profiles (3,4) and the fixing device according to claims 1-9.

11. The tent module (1) according to claim 10, where the beam profiles (3,4) comprise keder rails (8') configured for connection to a ballistic module (33) comprising keder cords (7).

12. The tent module (1) according to claim 11, where the ballistic module (33) comprises an open end (34) for filling with mass.

13. The tent module (1) according to any one of the previous claims 10-12, where the tent module (1) is configured for connection to other tent modules (1).

14. The tent module (1) according to any one of the previous claims 10-13, where the tent module (1) is configured for connection to a container (35).

## Patentansprüche

1. Befestigungsvorrichtung (10) zum Befestigen von zwei Trägerprofilen (3,4), die vertiefte Kanäle (11) umfassen, wobei die Befestigungsvorrichtung (10) umfasst:
ein erstes Plattenelement (12), das eine Kontaktseite (15) umfasst, die konfiguriert ist, um an einer Kontaktseite (16,17) eines zweiten und eines dritten Plattenelements (13,14) anzuliegen,
wobei das erste Plattenelement (12) ferner zwei Nasenabschnitte (18) und einen Klemmabschnitt (22) umfasst,
wobei jeder Nasenabschnitt (18) einen Vorsprung (21) umfasst, der in einer Richtung von der Kontaktseite (15) weg vorsteht und konfiguriert ist, um in einen entsprechenden vertieften Kanal (11) eingeführt zu werden,
**dadurch gekennzeichnet, dass** die Befestigungsvorrichtung ferner umfasst:
das zweite und dritte Plattenelement (13,14), die jeweils ferner einen Nasenabschnitt (24,24') und einen Klemmabschnitt (27,27') umfassen,
wobei der Nasenabschnitt (24,24') einen Vorsprung (25,25') umfasst, der in einer Richtung von der Kontaktseite (13,14) weg vorsteht und konfiguriert ist, um in einen entsprechenden vertieften Kanal (11) eingeführt zu werden,
wobei die Kontaktseite (16,17) des zweiten und des dritten Plattenelements (13,14) konfiguriert ist, um schwenkbar an der Kontaktseite (15) des ersten Plattenelements (12) zwischen dem Nasenabschnitt (18, 24, 24') und dem jeweiligen Klemmabschnitt (22, 27, 27') anzuliegen,
ein Klemmittel (31), das konfiguriert ist, um den Klemmabschnitt (22) des ersten Plattenelements (12) in einer Richtung zum Klemmabschnitt (27,27') des zweiten und dritten Plattenelements (13,14) hin vorzuspannen, so dass das zweite und dritte Plattenelement (13,14) im Verhältnis zu dem ersten Plattenelement (12) schwenken, und der Nasenabschnitt (24,24') des zweiten und dritten Plattenelements (13,14) in einer Richtung von den Nasenabschnitten (18) des ersten Plattenelements (12) weg in Anlage mit den jeweiligen vertieften Kanälen (11) der Trägerprofile (3,4) vorgespannt ist.

2. Befestigungsvorrichtung (10) nach Anspruch 1, wobei das erste, zweite und dritte Plattenelement (12,13,14) starr sind.

3. Befestigungsvorrichtung (10) nach einem der Ansprüche 1 oder 2, wobei die Kontaktseite (16,17) des zweiten und dritten Plattenelements (13,14) mit einer Erhöhung (29) zwischen dem Nasenabschnitt (24,24') und dem Klemmabschnitt (27,27') versehen ist.

4. Befestigungsvorrichtung (10) nach einem der vorgehenden Ansprüche, wobei die Kontaktseite (15) des ersten Plattenelements (12) mit einer Erhöhung (29) zwischen jedem Nasenabschnitt (18) und dem Klemmabschnitt (22) versehen ist.

5. Befestigungsvorrichtung (10) nach Anspruch 3 oder 4, wobei der Nasenabschnitt (18;24) und der Klemmabschnitt (22;27) relativ zueinander derart abgewinkelt sind, dass die Erhöhung (29) eine Kante zwischen dem Nasen- und den Klemmabschnitt (18,22;24,27;24',27') ist.

6. Befestigungsvorrichtung (10) nach einem der vorhergehenden Ansprüche 3 bis 5, wobei die Erhöhung (29) ein gekrümmter Abschnitt zumindest der Kontaktseite (15;16) ist.

7. Befestigungsvorrichtung (10) nach einem der vorhergehenden Ansprüche, wobei die Nasenabschnitte (18) des ersten Plattenelements (12) senkrecht zueinander angeordnet sind.

8. Befestigungsvorrichtung (10) nach einem der vorhergehenden Ansprüche, wobei das zweite und das dritte Plattenelement (13,14) symmetrisch ausgebildet sind.

9. Befestigungsvorrichtung (10) nach einem der vorhergehenden Ansprüche, wobei sich das Klemmmittel (31) durch Öffnungen (23, 28) in dem ersten, zweiten und dritten Plattenelement (12,13,14) erstreckt.

10. Zeltmodul (1), das Planensegmente (6), Trägerprofile (3,4) und die Fixiervorrichtung nach den Ansprüchen 1 bis 9 umfasst.

11. Zeltmodul (1) nach Anspruch 10, wobei die Trägerprofile (3,4) Kederschienen (8') umfassen, die zur Verbindung mit einem ballistischen Modul (33) konfiguriert sind, das Kederschnüre (7) umfasst.

12. Zeltmodul (1) nach Anspruch 11, wobei das ballistische Modul (33) ein offenes Ende (34) zum Füllen mit Masse umfasst.

13. Zeltmodul (1) nach einem der vorhergehenden Ansprüche 10 bis 12, wobei das Zeltmodul (1) zur Verbindung mit anderen Zeltmodulen (1) konfiguriert ist.

14. Zeltmodul (1) nach einem der vorhergehenden Ansprüche 10 bis 13, wobei das Zeltmodul (1) zur Verbindung mit einem Container (35) konfiguriert ist.

## Revendications

1. Dispositif de fixation (10) pour fixer deux profilés de poutre (3,4) comprenant des canaux en retrait (11), le dispositif de fixation (10) comprenant :
un premier élément en plaque (12) comprenant un côté de contact (15) configuré pour venir en butée contre un côté de contact (16,17) d'un deuxième et
d'un troisième élément en plaque (13,14),
le premier élément en plaque (12) comprenant en outre deux portions d'ergot (18) et une portion de serrage (22),
chaque portion d'ergot (18) comprenant une saillie (21) faisant saillie dans une direction à l'écart du côté de contact (15) et configurée pour être insérée dans un canal en retrait respectif (11),
**caractérisé en ce que** le dispositif de fixation comprend en outre :
le deuxième et troisième élément en plaque (13,14), chacun comprenant en outre une portion d'ergot (24,24') et une portion de serrage (27,27'),
la portion d'ergot (24,24') comprenant une saillie (25,25') faisant saillie dans une direction à l'écart du côté de contact (13,14) et configurée pour être insérée dans un canal en retrait respectif (11),
le côté de contact (16,17) du deuxième et du troisième élément en plaque (13,14) étant configuré pour venir en butée de manière pivotante au côté de contact (15) du premier élément en plaque (12) entre la portion d'ergot (18,24,24') et la portion de serrage respective (22,27,27'),
un moyen de serrage (31) configuré pour solliciter la portion de serrage (22) du premier élément en plaque (12) dans une direction vers la portion de serrage (27,27') des deuxième et troisième éléments en plaque (13,14) de telle sorte que les deuxième et troisième éléments en plaque (13,14) pivotent par rapport au premier élément en plaque (12), et la portion d'ergot (24,24') des deuxième et troisième éléments en plaque (13, 14) est sollicitée dans une direction éloignée à l'écart des portions d'ergot (18) du premier élément en plaque (12) en butée avec les canaux évidées respectifs (11) des profilés de poutre (3,4).

2. Dispositif de fixation (10) selon la revendication 1, dans lequel les premier, deuxième et troisième éléments en plaque (12,13,14) sont rigides.

3. Dispositif de fixation (10) selon la revendication 1 ou 2, dans lequel le côté de contact (16,17) des deuxième et troisième éléments en plaque (13,14) est pourvu d'une élévation (29) entre la portion d'ergot (24,24') et la portion de serrage (27,27').

4. Dispositif de fixation (10) selon l'une quelconque des revendications précédentes, dans lequel le côté de contact (15) du premier élément en plaque (12) est pourvu d'une surélévation (29) entre chaque portion d'ergot (18) et la portion de serrage (22).

5. Dispositif de fixation (10) selon la revendication 3 ou 4, dans lequel la portion d'ergot (18; 24) et la portion de serrage (22;27) sont inclinées l'une par rapport à l'autre de telle sorte que l'élévation (29) est un bord entre les portions d'ergot et de serrage (18,22;24,27;24',27').

6. Dispositif de fixation (10) selon l'une quelconque des revendications précédentes 3 à 5, dans lequel l'élévation (29) est une partie incurvée d'au moins le côté de contact (15;16).

7. Dispositif de fixation (10) selon l'une quelconque des revendications précédentes, dans lequel les portions d'ergot (18) du premier élément en plaque (12) sont disposées perpendiculairement l'une à l'autre.

8. Dispositif de fixation (10) selon l'une quelconque des revendications précédentes, dans lequel les deuxième et troisième éléments en plaque (13, 14) sont formés symétriquement.

9. Dispositif de fixation (10) selon l'une quelconque des revendications précédentes, dans lequel le moyen de serrage (31) s'étend à travers des ouvertures (23,28) dans les premier, deuxième et troisième éléments en plaque (12, 13, 14).

10. Module de tente (1) comprenant des segments de toile (6), des profilés de poutre (3,4) et le dispositif de fixation selon les revendications 1 à 9.

11. Module de tente (1) selon la revendication 10, dans lequel les profilés de poutre (3,4) comprennent des rails de keder (8') configurés pour être raccordés à un module balistique (33) comprenant des cordons de keder (7).

12. Module de tente (1) selon la revendication 11, dans lequel le module balistique (33) comprend une extrémité ouverte (34) pour se remplir de masse.

13. Module de tente (1) selon l'une quelconque des revendications précédentes 10 à 12, dans lequel le module de tente (1) est configuré pour être raccordé à d'autres modules de tente (1).

14. Module de tente (1) selon l'une quelconque des revendications précédentes 10 à 13, dans lequel le module de tente (1) est configuré pour être raccordé à un conteneur (35).
